# EUROPEAN PATENT SPECIFICATION

(11) **EP 3 416 990 B1**
(45) Date of publication and mention of the grant of the patent: **17.06.2020**
(21) Application number: 17704459.1
(22) Date of filing: 10.02.2017
(51) Int. Cl.: C08F 10/02, C08F 4/655

(54) **PREACTIVATED CATALYST COMPONENT FOR THE POLYMERIZATION OF OLEFINS**
VORAKTIVIERTE KATALYSATORKOMPONENTE ZUR POLYMERISIERUNG VON OLEFINEN
COMPOSANT DE CATALYSEUR PRÉACTIVÉ POUR LA POLYMÉRISATION D'OLÉFINES

(30) Priority: 15.02.2016 EP 16155626
(43) Date of publication of application: 26.12.2018
(73) Proprietor: Basell Polyolefine GmbH, 50389 Wesseling (DE)
(72) Inventor: SCHNEIDER, Martin, 65239 Hochheim (DE)
(74) Representative: LyondellBasell
(86) International application number: PCT/EP2017/052953
(87) International publication number: WO 2017/140580

(56) References cited:
- EP-A1- 0 703 246
- WO-A1-00/08073
- WO-A1-03/099882
- WO-A1-2009/150114
- US-A- 5 863 995

## Description

### FIELD OF THE INVENTION

The present disclosure relates to a process for the manufacture of pre-activated or pre-polymerized catalysts for the polymerization of olefins. In particular, the present disclosure relates to a process for the preparation of pre-activated or pre-polymerized catalysts comprising a solid catalyst component comprising Ti, Mg, halogen said pre-activated ore prepolymerized catalyst having reduced release of flammable gases in contact with water.

### BACKGROUND OF THE INVENTION

The vast majority of polyolefin manufacture is based on Ziegler and Ziegler-Natta catalysts.

The said catalysts are obtained by reacting a transition metal compound with an activator, also called co-catalyst, which is constituted by an organoaluminum compound.

The polymerization activity of such catalysts has been improved by the use of solid catalyst components in which the transition metal compound, usually a titanium halide, is supported, through various techniques, on a magnesium dihalide. In case of stereospecific polymerization of alpha olefins the use of an electron donor compound in the solid catalyst component (internal donor) has been found to increase polymer stereoregularity. Moreover, if additional donors (external donors) are used in polymerization in combination with an Al-alkyl compound, the catalyst stereospecificity is further increased.

Ziegler and Ziegler-Natta catalysts are used in the preparation of various polymers and copolymers of olefin monomers, such as ethylene, propylene, butene-1 hexene-1 etc, using several polymerization techniques such as liquid (slurry, bulk or solution) and gas-phase polymerization.

The versatility of this class of catalysts is also demonstrated by the fact that variations in the manufacture recipes are able to impart specific properties to the catalyst.

Prepolymerization of the catalyst with small quantities of olefinic monomers is carried out in order to enhance the morphological stability of the catalyst and reduce the extent of fragmentation in the initial stages of polymerization. As a result, the regularity of polymer particle shape and the polymer bulk density may be increased.

US4,302,565 teaches to pre-activate a catalyst precursor by contacting it with an aluminum alkyl compound in a Al/Ti ratio from higher than 0 to 10, specifically from 4 to 8. The pre-activated catalyst is then used in the polymerization process in combination with an additional amount of aluminum alkyl cocatalyst .

WO2009/150114 describes the use of alkyl halides in polymerization with the purpose of increasing the catalyst activity. For this purpose, the amount of alkyl halide used with respect to the total amount of aluminum alkyl cocatalyst is very low. Moreover, this document does not address the problem of active organometallic residues on the catalyst before polymerization. In fact, both the pre-polymerization and the preactivation of the catalyst may leave on the resulting catalyst active organometallic bonds.

These bonds may be broken and release flammable gases upon contact with water. While this problem is relatively of minor impact in the polymerization process due to the presence of scavengers which eliminate the water presents in the reactants, it is of more concern when the catalyst have to be stored and/or shipped.

Generally speaking, the release of flammable gases is in contact with water is a transportation risk, because in case of a leakage of a catalyst container, flammable or combustible gas compositions can be formed in the presence of water or air humidity.

In addition to the total amount of gas released, it is also worth noting that the risk becomes higher with the increasing speed of gas development. The combination of these factors leads to certain UN transport classifications which, in some cases, provide for the necessity of transportation approvals by national authorities.

It is therefore felt the need of a process aimed at reducing or eliminating the tendency of the catalyst to produce flammable gases when in contact with water while, at the same time, not significantly changing the catalyst performances.

### SUMMARY OF THE INVENTION

It is therefore an object of the present disclosure a solid catalyst component comprising the product of a process comprising
(a) a reaction step carried out at a temperature ranging from 0 to 150°C in which a Mg based compound of formula (MgClₘX₂₋ₘ)·nLB, in which m ranges from 0 to 2, n ranges from 0 to 6, X is, independently R, OR, -OCOR or -OC(O)-OR group, in which R is a C₁-C₂₀ hydrocarbon group, and LB is a Lewis base, is reacted with a Ti compound, having at least a Ti-Cl bond, in an amount such that the Ti/Mg molar ratio is greater than 0.1 optionally in the presence of an electron donor compound thereby obtaining a catalyst precursor;
(b) a reaction step in which the product coming from the preceding step is reacted with an organoaluminum compound in such an amount to have a Al/Ti ratio of 0.01 to 50 optionally in the presence of an amount of olefin monomer able to produce from 0.1 to 50gr of polymer per gram of catalyst precursor; optionally followed by one or more washing steps;
(c) treating the catalyst precursor coming from step (b) with a mono or polychlorinated R¹-Cl compound in a R¹Cl/Al ratio from 0.1 to 5 where R¹ is hydrogen or a C₁-C₂₀ hydrocarbon group and
(d) isolating and recovering the solid catalyst component.

### DETAILED DESCRIPTION OF THE INVENTION

The Mg based compound used as a starting compound in the reaction step (a) is preferably selected among a magnesium alcoholate of formula Mg(OR²)(OR³) compound, in which R² and R³ are identical or different and are each an alkyl radical having 1 to 10 carbon atoms. R² and R³ are preferably alkyl groups having from 2 to 10 carbon atoms or a radical - (CH₂)ₙOR⁴, where R⁴ is a C₁-C₄-alkyl radical and n is an integer from 2 to 6. Preferably R² and R³ are C₁-C₂-alkyl radical. Examples of such magnesium alkoxides are: magnesium dimethoxide, magnesium diethoxide, magnesium di-i-propoxide, magnesium di-n-propoxide, magnesium di-n-butoxide, magnesium methoxide ethoxide, magnesium ethoxide n-propoxide, magnesium di(2-methyl-1-pentoxide), magnesium di(2-methyl-1-hexoxide), magnesium di(2-methyl-1-heptoxide), magnesium di(2-ethyl-1-pentoxide), magnesium di(2-ethyl-1-hexoxide), magnesium di(2-ethyl-1-heptoxide), magnesium di(2-propyl-1-heptoxide), magnesium di(2-methoxy-1-ethoxide), magnesium di(3-methoxy-1-propoxide), magnesium di(4-methoxy-1-butoxide), magnesium di(6-methoxy-1-hexoxide), magnesium di(2-ethoxy-1-ethoxide), magnesium di(3-ethoxy-1-propoxide), magnesium di(4-ethoxy-1-butoxide), magnesium di(6-ethoxy-1 -hexoxide), magnesium dipentoxide, magnesium dihexoxide. The use of simple Mg(OC₂H₅)₂, may have average particle diameter ranging from 200 to 1200 µm preferably about 500 to 700 µm. In one embodiment, its particle size has been reduced before being used in the preparation of the catalyst of the present disclosure. In order to do so, the magnesium alcoholate is suspended in an inert, saturated hydrocarbon thereby creating a hydrocarbon suspension. The suspension can be subject to high shear stress conditions by means of a highspeed disperser (for example Ultra-Turrax or Dispax, IKA-Maschinenbau Janke & Kunkel GmbH) working under inert atmosphere(Ar or N2). Preferably, the shear stress is applied until a gel-like dispersion is obtained. This dispersion differs from a standard suspension in that it is more viscous than the suspension and is gel-like. Compared with the suspended magnesium alcoholate, the dispersed magnesium alcoholate gel settles down much more slowly and to a far lesser extent.

As already explained, in step (a) the Mg compound is reacted with a compound Ti compound, having at least a Ti-Cl bond, such as TiCl₄.

In one embodiment, the magnesium compound is a magnesium alkoxide and the reaction with TiCl₄ is carried out in an inert medium at a molar ratio of Ti/Mg ranging from 0.1 to 10 and preferably in the range 0.2 to 6. In a particular embodiment the Ti/Mg molar ratio ranges 1.5 to 4, and more preferably in the range of 1.75 to 2.75. The reaction temperature may range from 50 to 100°C, preferably from 60 to 90°C. The reaction time in the first stage is 0.5 to 8 hours, preferably 2 to 6 hours.

The inert suspension media for the abovementioned reactions include aliphatic and cycloaliphatic hydrocarbons such as butane, pentane, hexane, heptane, cyclohexane, isooctane and also aromatic hydrocarbons such as benzene and xylene. Petroleum spirit and hydrogenated diesel oil fractions which have carefully been freed of oxygen, sulfur compounds and moisture can also be used.

The reaction step (a) may be carried out also in the presence of an electron donor compound. Said electron donor compound can be selected from esters, ethers, amines, silanes and ketones. In particular, the alkyl and aryl esters of mono or polycarboxylic acids such as for example esters of benzoic, phthalic, malonic and succinic acid are preferred. Specific examples of such esters are n-butylphthalate, di-isobutylphthalate, di-n-octylphthalate, diethyl 2,2-diisopropylsuccinate, diethyl 2,2-dicyclohexyl-succinate, ethyl-benzoate and p-ethoxy ethyl-benzoate. Moreover, can be used also the 1,3 diethers of the formula: 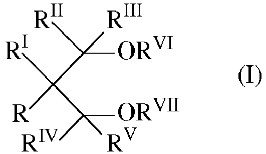 wherein R, R^{I}, R^{II}, R^{III}, R^{IV} and R^{V} equal or different to each other, are hydrogen or hydrocarbon radicals having from 1 to 18 carbon atoms, and R^{VI} and R^{VII}, equal or different from each other, have the same meaning of R-R^{V} except that they cannot be hydrogen; one or more of the R-R^{VII} groups can be linked to form a cycle. The 1,3-diethers in which R^{VI} and R^{VII} are selected from C₁-C₄ alkyl radicals are particularly preferred. Also usable are the diolesters donors disclosed in USP7,388,061. Particularly preferred are also the donor mixtures between the succinate esters and the 1,3-diesters above described as disclosed for example in WO2012/139897.

If used, the electron donor compound is present in molar ratio with respect to the magnesium comprised between 1:4 and 1:20.

In one embodiment, an electron donor is used in step (a) and the magnesium compound is selected from adducts of formula MgCl₂•nR⁵OH, where n is a number between 0.1 and 6, and R⁵ is a hydrocarbon radical having 1-18 carbon atoms. Preferably, n ranges from 1 to 5 and more preferably from 1.5 to 4.5.

Adduct of this type are disclosed for example in USP 4,399,054 and us 4,469,648. In a particularly preferred embodiment, the electron donor compound is used together with a MgCl₂•nR⁵OH adduct as Mg compound. In this latter case, it is also preferred to use a Ti/Mg molar ratio higher than 10. Preferably, the Ti compound is TiCl₄ and the reaction is carried out in an excess of liquid TiCl₄ at a temperature ranging from 50 to 150°C.

The reaction step (a) can be carried out one or more times under the same or different conditions.

In a further step (b) the product of the reaction step (a) is then contacted with an organo-aluminum compound preferably in such an amount (calculated with reference to the Ti content of the solid catalyst component as obtained by the previous step) to have a Al/Ti ratio of 0.01 to 25 more preferably from 0.05 to 10 and especially from 0.5 to 10.

The organo-aluminum compound may be trialkyl aluminum compound in which the alkyl is a C₁-C₆ carbon atoms or an alkyl aluminum chloride in which one or two alkyl groups have been replaced by chlorine groups.

Preferred tri-alkylaluminum compounds are aluminum trimethyl, triethyl, triisobutyl and tri-n-octyl.

The alkylaluminum chloride can be selected from the dialkylaluminum monochlorides of the formula R⁶₂AlCl or the alkylaluminum sesquichlorides of the formula R⁶₃Al₂Cl₃ in which R⁶ can be identical or different alkyl radicals having 1 to 16 carbon atoms. The following may be mentioned as examples: (C₂H₅)₂AlCl, (isobutyl)₂AlCl and (C₂H₅)₃Al₂Cl₃, (ethylaluminum sesquichloride), this latter being preferred. The reaction can be carried out in a stirred vessel at a temperature of from 0°C to 150°C, preferably from 30°C to 100°C for a time ranging from 0.5 to 5 hours.

In one embodiment, an aluminum alkylchloride compound is used in amounts such that the Al/Ti molar ratio (calculated with reference to the Ti content of the solid catalyst component as obtained by the previous step) is from 0.05 to 1, preferably from 0.1 to 0.5.

As explained step (b) can be carried out in the presence of small quantities of olefinic monomers thereby producing a pre-polymerized catalyst.

The amount of monomer used ranges from 0.1 to 100 grams of per gram of solid catalyst component prepared in the one or more step (a) preferably from 0.5 to 50 grams. Preferred olefinic monomers are ethylene, propylene, butene-1 and hexene-1.

According to a particular embodiment, no monomer is present in step (b) and an aluminum alkyl chloride as previously described is used.

According to another specific embodiment, the monomer is present and a trialkyl aluminum compound is used.

In a further embodiment, the product coming from reaction step (a) is first reacted with an aluminum alkyl chloride in the absence of a monomer, and then, the so obtained product is further reacted with a trialkyl aluminum compound in the presence of small amounts of olefinic monomers as described above.

The product coming from step (b) is then treated in step (c) with a mono or polychlorinated R¹-Cl compound in a R¹Cl/Al ratio from 0.01 to 10, preferably from 0.01 to 5 further reacted with a trialkyl aluminum compound in the presence of small amounts of olefinic monomers as described above.

The product coming from step (b) is then treated in step (c) with a mono or polychlorinated R¹-Cl compound in a R¹Cl/Al ratio from 0.1 to 5 more preferably 0.1 to 3 and especially from 0.5 to 3 where R¹ is hydrogen or a C₁-C₂₀ hydrocarbon group.

In a preferred embodiment the R¹-Cl compound is a chlorinated hydrocarbon chosen among monochlorinated hydrocarbons. More preferably, it is chosen among monochlorinated alkyls having from 1 to 10 carbon atoms.

Non limiting exemplary compounds R¹-Cl are hydrogen chloride, propylchloride, i-propylchloride, butylchloride, s-butylchloride, t-butylchloride 2-chlorobutane, cyclopentylchloride, cyclohexylchloride, 1,2-dichloroethane, 1,6-dichlorohexane, Among them, particularly preferred are butyl chloride, i-propylchloride, 2-chlorobutane and cyclopentylchloride. Preferably, the component R¹-Cl is used in such amounts to give a molar ratio between with the Ti atoms contained in the solid coming from step (b) of higher than 2.5, preferably higher than 3 and more preferably higher than 3.5.

The reaction step (c) is preferably carried out in the presence of a suitable dispersion medium such as an inert liquid hydrocarbon. In an embodiment the so obtained slurry constitutes the final catalyst that can be shipped in this form.

In an alternative embodiment, the solid catalyst coming from step (c) is then recovered and isolated from the slurry using conventional techniques, such as filtration, and subsequently dried.

For storage or shipment the so obtained dried catalysts can be suspended in liquid hydrocarbons such as hexane, or more viscous substances which preserve them from contact with water.

As explained above and illustrated in the working examples the so obtained catalysts when is put in contact with water releases no or very limited amount of flammable gases. This allows the catalyst to be packed and shipped with a low risk category. Moreover, it is worth noting that the reduction of flammable gas emission is obtained maintaining the catalyst performances in terms of activity and hydrogen response at substantially the same level so that catalyst users do not need to change operative parameters when using the catalyst. triisobutylaluminum (TIBA), tri-n-butylaluminum, tri n-hexylaluminum, tri-n-octylaluminum, triisoprenylaluminum. Also alkylaluminum halides and in particular alkylaluminum chlorides such as diethylaluminum chloride (DEAC), diisobutylalumunum chloride, Al-sesquichloride and dimethylaluminum chloride (DMAC) can be used in mixture with said trialuminum alkyls. Use of TEAL and TIBA is preferred.

The catalysts systems of the disclosure are particularly suited for liquid phase polymerization process. In fact, the small average particle size, such as less than 30µm, preferably ranging from 7 to 15 µm, are particularly suited for slurry polymerization in an inert medium, which can be carried out continuously in stirred tank reactors or in loop reactors. In a preferred embodiment the ethylene polymerization process is carried out in two or more cascade loop or stirred tank reactors producing polymers with different molecular weight and/or different composition in each reactor, thereby showing as a whole a broad molecular weight distribution.

In addition to the ethylene homo and copolymers mentioned above, the catalysts of the present disclsoure are also suitable for preparing very-low-density and ultra-low-density polyethylenes (VLDPE and ULDPE, having a density lower than 0.920g/cm³ to 0.880 g/cm³) consisting of copolymers of ethylene with one or more alpha-olefins having from 3 to 12 carbon atoms, having a mole content of units derived from ethylene of higher than 80%; elastomeric copolymers of ethylene and propylene and elastomeric terpolymers of ethylene and propylene with smaller proportions of a diene having a content by weight of units derived from ethylene of between about 30 and 70%.

### EXAMPLES

The results for the elemental composition of the catalysts described reported in the examples were obtained by the following analytical methods:
Ti: photometrically via the peroxide complex
Mg, Cl: titrimetrically by customary methods
MFR_{5/190}: mass flow rate (melt index) in accordance with ISO1133, nominal load of 5 kg and test temperature = 190°C
FRR_{21.6/5}: flow rate ratio; quotient of MFR21.6g/190° and MFR5g/190°
Bulk density: in accordance with DIN EN ISO 60
d₅₀ (mean particle diameter): in accordance with DIN 53477 and DIN66144 M_{w}/Mₙ (polydispersity): Measure of the width of the molar mass distribution (M_{w} = weight average, Mₙ = number average), determined by the GPC method in accordance with DIN55672. The measurements were carried out at 135°C using trichlorobenzene as solvent.

### Reaction with Water test

This test is performed at ambient temperature (20°C) and atmospheric pressure in an inert gas atmosphere inside the apparatus consisting of a conical flask equipped with a dropping funnel and a syringe at a gas outlet junction at the upper part of the conical flask Water (100 ml) is put into the dropping funnel and the catalyst sample is placed in a conical flask. The tap of the dropping funnel is opened to let the water into the conical flask and a stop watch is started. The volume of gas evolved is measured by a syringe.

### Example 1

### Preparation of the solid catalyst component

All catalyst preparation steps are performed under inert gas atmosphere as this type of catalysts are very air and moisture sensitive.
A catalyst component was prepared according to the procedure disclosed in example 2 of EP1507805. A dried catalyst sample is re-suspended in diesel oil (hydrogenated petroleum fraction having a boiling range from 140 to 170°C), the stirred slurry was then treated with 1-butyl chloride in a ratio of 0.002 mol per g of solid catalyst at 75°C for 2 hours. The resulting 1-butyl chloride treated catalyst sample was filtered off and dried by nitrogen purging. The so obtained catalyst was subject to the reaction with water test described in the characterization section. Results are reported in table 1.

### Ethylene polymerization in suspension:

The polymerization experiments were carried out batchwise in a 1500cm³ reactor. This reactor was equipped with an impeller stirrer. The temperature in the reactor was measured and automatically kept constant. The polymerization temperature was 85 ±1 °C.

The polymerization reaction was carried out in the following way:
800 cm³ of diesel oil (hydrogenated petroleum fraction having a boiling range from 140 to 170°C) were placed in a 1.5 dm³ reactor. The reactor was then heated to 85°C and, under a blanket of nitrogen, 2 mmol of triethylaluminum as cocatalyst and subsequently the catalyst prepared as described in Example 1 a in an amount corresponding to 0.05 mmol of titanium, as a suspension diluted with diesel oil, were introduced into the reactor. The reactor was then pressurized with 3.15 bar of hydrogen and 3.85 bar of ethylene. The total pressure of 7 bar was kept constant during the polymerization time of 2 hours by replacing the ethylene which had been consumed. The polymerization was stopped by shutting off the ethylene feed and venting of the gases. The polymer powder was separated off from the dispersion medium by filtration and drying.

The results of the polymerizations are shown in Table 1.

### Example 2 (Comparative)

### Example 1 was repeated omitting the step of reaction with the 1-butyl chloride.

The catalyst was subject to the water reaction test and to ethylene polymerization procedure as in example 1. Results are shown in table 1.

### Example 3

Example 1 was repeated using dry hydrogen chloride gas as treatment agent purged slowly through the catalyst slurry applying a temperature of 50°C.

The catalyst was subject to the water reaction test and to ethylene polymerization procedure as in example 1. Results are shown in table 1.

**TABLE 1**

| | **Catalysts:** | **Example 2 (comparative)** | **Example 1** | **Example 3** |
|---|---|---|---|---|
| Catalyst | | | | |
| pretreatment | | --- | 1-Cl-Butane | H-Cl |
| compound | | | | |
| Catalyst | | | | |
| pretreatment amount | [mol/g cat.] | --- | 0,0020 | 0,0055 |

| **Polymerization test** | | | | |
|---|---|---|---|---|
| PE amount | [g] | 87.4 | 86.3 | 90.7 |
| Activity | [g/mmol Ti] | 5.83 | 5.75 | 6.05 |
| MFI [190°C/5 kg] | [g/10 min] | 22.3 | 17.5 | 16.3 |

| **Reaction with water test** | | | | |
|---|---|---|---|---|
| Catalyst amount | [g] | 2.49 | 2.52 | 10.19 |
| gas developed in 1 | [l] | 0.068 | 0.009 | 0.058 |
| gas developed (total) | [l] | 0.085 | 0.017 | 0.060 |
| gas development speed in 1st min. | [l/min/kg] | 27 | 4 | 6 |
| Category 1 minimum of 10 l/min/kg exceeded | | yes | no | no |

## Claims

1. A solid catalyst component comprising the product of a process comprising
(a) reacting at a temperature ranging from 0 to 150°C a Mg based compound of formula (MgClₘX₂₋ₘ)·nLB, in which m ranges from 0 to 2, n ranges from 0 to 6, X is, independently R, OR, -OCOR or -OC(O)-OR group, in which R is a C₁-C₂₀ hydrocarbon group, and LB is a Lewis base, with a Ti compound, having at least a Ti-Cl bond, in an amount such that the Ti/Mg molar ratio is greater than 0.1 optionally in the presence of an electron donor compound thereby obtaining a catalyst precursor;
(b) reacting the product coming from the preceding step with an organoaluminum compound in such an amount to have a Al/Ti ratio of 0.01 to 50 optionally in the presence of an amount of olefin monomer able to produce from 0.1 to 50gr of polymer per gram of catalyst precursor; optionally followed by one or more washing steps;
(c) treating the catalyst precursor coming from step (b) with a mono or polychlorinated R¹-Cl compound in a R¹Cl/Al ratio from 0.1 to 5 where R¹ is hydrogen or a C₁-C₂₀ hydrocarbon group and
(d) isolating and recovering the solid catalyst component.

2. The solid catalyst component of claim 1 in which the Mg compound is a magnesium alcoholate of formula Mg(OR²)(OR³) compound, in which R² and R³ are identical or different and are each an alkyl radical having 1 to 10 carbon atoms.

3. The solid catalyst component of claim 2 in which R² and R³ are C₁-C₂-alkyl radical.

4. The solid catalyst component of claim 2 in which the magnesium alcoholate is used as a gel dispersion.

5. The solid catalyst component of claim 1 in which the Ti compound is TiCl₄.

6. The solid catalyst component of claim 2 in which the molar ratio of Ti/Mg ranges from 0.2 to 6.

7. The solid catalyst component of claim 1 in which in step (b) the product of the reaction step (a) is contacted with an organo aluminum compound in such an amount to have a Al/Ti ratio, referred to the Ti content of the solid catalyst component as obtained by the previous step, ranging from 0.05 to 10.

8. The solid catalyst component of claim 7 in which the organoaluminum compound is chosen from trialkyl aluminum compound in which the alkyl is a C₁-C₁₆ carbon atoms or an alkyl aluminum chloride in which one or two alkyl groups are replaced by chlorine groups.

9. The solid catalyst component of claim 8 in which the organoaluminum compound is chosen from aluminum trimethyl, triethyl, triisobutyl and tri-n-octyl, (C₂H₅)₂AlCl, (isobutyl)₂AlCl and (C₂H₅)₃Al₂Cl₃.

10. The solid catalyst component of claim 1 in which in step (c) the R¹-Cl compound is a chlorinated hydrocarbon chosen among monochlorinated hydrocarbons.

11. The solid catalyst component of claim 1 in which the R¹-Cl compound is selected from hydrogen chloride, propylchloride, i-propylchloride, butylchloride, s-butylchloride, t-butylchloride, 2-chlorobutane, cyclopentylchloride, cyclohexylchloride, 1,2-dichloroethane, 1,6-dichlorohexane.

12. The solid catalyst component of claim 1 in which step (b) is carried out in the presence of small quantities of olefinic monomers thereby producing a pre-polymerized catalyst.

13. The solid catalyst component of claim 12 in which the amount of monomer ranges from 0.1 to 100 grams of per gram of solid catalyst component prepared in step (a).

## Patentansprüche

1. Feste Katalysatorkomponente, umfassend das Produkt eines Verfahrens, welches umfasst:
(a) Umsetzen einer auf Mg basierenden Verbindung mit der Formel (MgClₘX₂₋ₘ)•nLB, wobei m im Bereich von 0 bis 2 liegt, n im Bereich von 0 bis 6 liegt, X unabhängig eine Gruppe R, OR, -OCOR oder -OC(O)-OR ist, wobei R eine C₁-C₂₀-Kohlenwasserstoffgruppe ist, und LB eine Lewis-Base ist, mit einer Ti-Verbindung mit mindestens einer Ti-Cl-Bindung in einer Menge, so dass das Molverhältnis von Ti/Mg größer als 0,1 ist, gegebenenfalls in Gegenwart einer Elektronendonorverbindung, bei einer Temperatur im Bereich von 0 bis 150 °C, wodurch ein Katalysatorvorläufer erhalten wird;
(b) Umsetzen des aus dem vorhergehenden Schritt kommenden Produkts mit einer Organoaluminiumverbindung in einer solchen Menge, dass man ein Verhältnis von Al/Ti von 0,01 bis 50 hat, gegebenenfalls in Gegenwart einer Menge an Olefinmonomer, die in der Lage ist, 0,1 bis 50 g Polymer pro Gramm Katalysatorvorläufer zu produzieren; gegebenenfalls gefolgt von einem oder mehreren Waschschritten;
(c) Behandeln des aus Schritt (b) kommenden Katalysatorvorläufers mit einer mono- oder polychlorierten Verbindung R¹-Cl in einem Verhältnis von R¹Cl/Al von 0,1 bis 5, wobei R¹ Wasserstoff oder eine C₁-C₂₀-Kohlenwasserstoffgruppe ist, und
(d) Isolieren und Gewinnen der festen Katalysatorkomponente.

2. Feste Katalysatorkomponente nach Anspruch 1, wobei die Mg-Verbindung eine Magnesiumalkoholatverbindung mit der Formel Mg(OR²)(OR³) ist, in der R² und R³ gleich oder unterschiedlich sind und jeweils ein Alkylrest mit 1 bis 10 Kohlenstoffatomen sind.

3. Feste Katalysatorkomponente nach Anspruch 2, wobei R² und R³ C₁- bis C₂-Alkylreste sind.

4. Feste Katalysatorkomponente nach Anspruch 2, wobei das Magnesiumalkoholat als Geldispersion verwendet wird.

5. Feste Katalysatorkomponente nach Anspruch 1, wobei die Ti-Verbindung TiCl₄ ist.

6. Feste Katalysatorkomponente nach Anspruch 2, wobei das Molverhältnis von Ti/Mg im Bereich von 0,2 bis 6 liegt.

7. Feste Katalysatorkomponente nach Anspruch 1, wobei in Schritt (b) das Produkt des Reaktionsschritts (a) mit einer Organoaluminiumverbindung in einer solchen Menge kontaktiert wird, dass man ein Verhältnis von Al/Ti, bezogen auf den Ti-Gehalt der festen Katalysatorkomponente, wie sie in dem vorhergehenden Schritt erhalten wurde, im Bereich von 0,05 bis 10 hat.

8. Feste Katalysatorkomponente nach Anspruch 7, wobei die Organoaluminiumverbindung ausgewählt ist aus Trialkylaluminiumverbindung, in der das Alkyl mit C₁-C₁₆ Kohlenstoffatomen ist, oder einem Alkylaluminiumchlorid, bei dem eine oder zwei Alkylgruppen durch Chlorgruppen ersetzt sind.

9. Feste Katalysatorkomponente nach Anspruch 8, wobei die Organoaluminiumverbindung ausgewählt ist aus Aluminiumtrimethyl, -triethyl, -triisobutyl und -tri-n-octyl, (C₂H₅)₂AlCl, (Isobutyl)₂AlCl und (C₂H₅)₃Al₂Cl₃.

10. Feste Katalysatorkomponente nach Anspruch 1, wobei in Schritt (c) die Verbindung R¹-Cl ein chlorierter Kohlenwasserstoff ausgewählt aus monochlorierten Kohlenwasserstoffen ist.

11. Feste Katalysatorkomponente nach Anspruch 1, wobei die Verbindung R¹-Cl ausgewählt ist aus Chlorwasserstoff, Propylchlorid, i-Propylchlorid, Butylchlorid, s-Butylchlorid, t-Butylchlorid, 2-Chlorbutan, Cyclopentylchlorid, Cyclohexylchlorid, 1,2-Dichlorethan, 1,6-Dichlorhexan.

12. Feste Katalysatorkomponente nach Anspruch 1, wobei Schritt (b) in Gegenwart von kleinen Mengen an olefinischen Monomeren durchgeführt wird, wodurch ein vorpolymerisierter Katalysator produziert wird.

13. Feste Katalysatorkomponente nach Anspruch 12, wobei die Menge an Monomer im Bereich von 0,1 bis 100 Gramm pro Gramm feste Katalysatorkomponente liegt, die in Schritt (a) hergestellt wurde.

## Revendications

1. Constituant catalytique solide comprenant le produit d'un procédé comprenant
(a) la réaction, à une température située dans une plage de 0 à 150°C, d'un composé à base de Mg de formule (MgClₘX₂₋ₘ)•ₙLB, dans laquelle m est situé dans une plage de 0 à 2, n est situé dans une plage de 0 à 6, X représente, indépendamment, R, OR, -OCOR ou -OC(O)-OR, où R représente un groupe hydrocarboné en C₁-C₂₀, et LB représente une base de Lewis, avec un composé à base de Ti, présentant au moins une liaison Ti-Cl, en une quantité telle que le rapport molaire Ti/Mg est supérieur à 0,1, éventuellement en présence d'un composé donneur d'électrons, ce qui permet d'obtenir un précurseur catalytique ;
(b) la réaction du produit provenant de l'étape précédente avec un composé d'organoaluminium en une quantité telle qu'on obtient un rapport Al/Ti de 0,01 à 50, éventuellement en présence d'une quantité de monomère oléfinique en mesure de produire 0,1 à 50 g de polymère par gramme de précurseur catalytique ; éventuellement suivie d'une ou plusieurs étapes de lavage ;
(c) le traitement du précurseur catalytique provenant de l'étape (b) avec un composé R¹-Cl monochloré ou polychloré à un rapport R¹Cl/Al de 0,1 à 5, R¹ représentant hydrogène ou un groupe hydrocarboné en C₁-C₂₀ et
(d) l'isolement et la récupération du constituant catalytique solide.

2. Constituant catalytique solide selon la revendication 1, dans lequel le composé à base de Mg est un composé d'alcoolate de magnésium de formule Mg(OR²)(OR³), dans laquelle R² et R³ sont identiques ou différents et représentent chacun un radical alkyle comprenant 1 à 10 atomes de carbone.

3. Constituant catalytique solide selon la revendication 2, dans lequel R² et R³ représentent un radical alkyle en C₁-C₂.

4. Constituant catalytique solide selon la revendication 2, dans lequel l'alcoolate de magnésium est utilisé en tant que dispersion de gel.

5. Constituant catalytique solide selon la revendication 1, dans lequel le composé à base de Ti est TiCl₄.

6. Constituant catalytique solide selon la revendication 2, dans lequel le rapport molaire Ti/Mg est situé dans une plage de 0,2 à 6.

7. Constituant catalytique solide selon la revendication 1, dans lequel, à l'étape (b), le produit de l'étape de réaction (a) est mis en contact avec un composé d'organoaluminium en une quantité telle qu'on obtient un rapport Al/Ti, par rapport à la teneur en Ti du constituant catalytique solide tel que obtenu par l'étape précédente, situé dans une plage de 0,05 à 10.

8. Constituant catalytique solide selon la revendication 7, dans lequel le composé d'organoaluminium est choisi parmi un composé de trialkylaluminium dans lequel alkyle comprend C₁-C₁₆ atomes de carbone ou un chlorure d'alkylaluminium dans lequel un ou deux groupes alkyle sont remplacés par des groupes chlore.

9. Constituant catalytique solide selon la revendication 8, dans lequel le composé d'organoaluminium est choisi parmi le triméthylaluminium, le triéthylaluminium, le triisobutylaluminium et le tri-n-octylaluminium, (C₂H₅)₂AlCl, (isobutyl)₂AlCl et (C₂H₅)₃Al₂Cl₃.

10. Constituant catalytique solide selon la revendication 1, dans lequel, à l'étape (c), le composé R¹-Cl est un hydrocarbure chloré choisi parmi les hydrocarbures monochlorés.

11. Constituant catalytique solide selon la revendication 1, dans lequel le composé R¹-Cl est choisi parmi le chlorure d'hydrogène, le chlorure de propyle, le chlorure de i-propyle, le chlorure de butyle, le chlorure de s-butyle, le chlorure de t-butyle, le 2-chlorobutane, le chlorure de cyclopentyle, le chlorure de cyclohexyle, le 1,2-dichloroéthane, le 1,6-dichlorohexane.

12. Constituant catalytique solide selon la revendication 1, dans lequel l'étape (b) est réalisée en présence de petites quantités de monomères oléfiniques, ce qui permet de produire un catalyseur prépolymérisé.

13. Constituant catalytique solide selon la revendication 12, dans lequel la quantité de monomère est située dans une plage de 0,1 à 100 grammes par gramme de constituant catalytique solide préparé à l'étape (a).
